# EUROPEAN PATENT APPLICATION

(11) **EP 2 738 901 A1**
(43) Date of publication of application: **04.06.2014**
(21) Application number: 12819744.9
(22) Date of filing: 27.07.2012
(51) Int. Cl.: H02J 3/32, H02J 7/00

(54) **CHARGE/DISCHARGE CONTROL SYSTEM FOR STORAGE CELL ASSEMBLY**

(30) Priority: 29.07.2011 JP 2011167113
(71) Applicant: Sanyo Electric Co., Ltd., Moriguchi-shi, Osaka 570-8677 (JP)
(72) Inventor: OKUDA, Yasuo, Moriguchi-shi Osaka 570-8677 (JP)
(74) Representative: Metzler, Volker
(86) International application number: PCT/JP2012/069135
(87) International publication number: WO 2013/018693

(57) **Abstract**

A charge/discharge control system for a storage battery assembly, wherein a parallel off is appropriately canceled when a plurality of battery blocks are connected in parallel, and a parallel off subsequently occurs in which one of the battery blocks becomes disconnected from parallel connection. A charge/discharge control system for a storage battery assembly includes a plurality of battery blocks (32) each connected in parallel to a charge/discharge main bus (18) via protective resistors (22), and a plurality of switches (24) connected in parallel to the protective resistors (22), between the charge/discharge main bus (18) and the plurality of battery blocks (32). In a state in which the plurality of switches (24) are all on, when one of the plurality of switches (24) turns off and a parallel off occurs, a charge/discharge control device (52) performs processing for throttling the charge/discharge power, that flows to the charge/discharge main bus (18), in accordance with a pre-set reference. When the parallel off is canceled by the throttling processing, the charge/discharge power is restored.

## Description

### TECHNICAL FIELD

The present invention generally relates to a charge/discharge control system for a storage battery assembly, and more particular to a charge/discharge control system for a storage battery assembly in which processing is performed for eliminating voltage difference between battery blocks connected in parallel with each other.

### BACKGROUND ART

In power management, it is preferred that generation of power or transmission of power is performed efficiently in accordance with power consumption of a load. When the power consumption of a load fluctuates, a power storage device can be used to average power demands. Although a secondary battery such as a lithium ion battery can be used as the power storage device, a terminal-to-terminal voltage of one storage battery, which is a unit, is around 1-4V, and a capacity of charge/discharge current thereof is small. A battery block in which a plurality of storage batteries are connected in series may be used, but it becomes necessary for many battery blocks to be used in series connection or parallel connection, depending on power consumption of a load.

In a case where battery blocks are connected in parallel with each other, if voltages of the battery blocks are different, a current flows from a higher voltage to a lower voltage, which may cause an excessive current depending on the situation.

Patent Literature 1, for example, points out that, in a voltage averaging circuit, if lithium ion batteries or the like whose internal impedance is lower than that of a conventional lead acid storage battery are directly connected in parallel, it is possible that an excessive current will flow to one of battery trains because of slight difference in impedance or contact resistance which is caused by variation in manufacturing. Therefore, it has been disclosed that, in a power storage device in which battery trains, each having a plurality of secondary batteries connected, are connected in parallel, it is determined whether or not to perform voltage adjustment based on battery train information of respective battery trains. If it is determined that the voltage adjustment is necessary, an offset command for voltage adjustment is outputted from voltage adjustment means, and charge/discharge control is performed by a power converter connected to each of the battery trains.

### CITATION LIST

### PATENT LITERATURE

Patent Literature 1: Japanese Patent Laid-Open Publication No. 2010-141970

### SUMMARY OF INVENTION

### TECHNICAL PROBLEM

In order to cancel voltage difference occurring when battery blocks are connected in parallel, a voltage averaging circuit may be used, but this results in a complex system configuration. If a plurality of battery blocks are simply connected in parallel at the time when the battery blocks are combined, a charge/discharge current flows accordingly between a battery block of high voltage and a battery block of low voltage, as a result of which voltage averaging naturally occurs. In such a case, if there exists a significant voltage difference, the charge/discharge current becomes excessive to compensate for the voltage difference. Therefore, preferably, by using another means, the voltage difference is reduced by some extent in advance, and then, the battery blocks are connected in parallel with each other.

In one method to attain the above stated purpose, a protective resistor is connected in series between each of battery blocks and a charge/discharge main bus, to which a plurality of battery blocks are connected in parallel, and a switch is arranged in parallel with the protective resistor. By turning off the switch while a voltage difference between the battery blocks is large, a current flows between the battery blocks through the protective resistor. As a result, an excessive current is prevented from flowing between the battery blocks, and a voltage difference between the battery blocks is gently canceled. The voltage difference between the battery blocks can be made zero immediately by turning on the switch when the voltage difference becomes smaller to some extent.

After the voltage difference between the battery blocks is canceled by the above stated method, the battery blocks are connected with no intervention of the protective resistor. Therefore, a balance of voltages between the battery blocks is held normally and no voltage difference is caused.

However, in some cases a voltage difference between battery blocks may become larger, and the switch turns off. For example, if the switch maintains an on-state and a current continues to flow, the switch is heated and its temperature rises. Accordingly, an internal resistance of the switch rises. Under normal conditions, the internal resistances of the switches of the battery blocks vary in the same way. However if the temperature of only one switch rises more than that of others because of slight quality variation or difference in heat radiation property of the switches, the internal resistance thereof increases more than that of others, which results in further vigorous heating to increase the temperature difference, thereby generating a large voltage difference. As a result, among a plurality of battery blocks connected in parallel, a battery block appears that breaks away from the parallel connection.

Breaking away from a parallel connection is referred to as parallel-off, and little charge/discharge current flows to a parallel-off battery block. Since the charge/discharge current flows to other battery blocks, a voltage difference between a parallel-off battery block and other battery blocks gradually increases. If this happens, it is difficult to cancel the voltage difference. If the parallel-off continues, the battery block thereof does not contribute to charging/discharging, and charge/discharge capability as the entire storage battery assembly degrades, thus sufficient operation is not expected.

It is an object of the present invention to provide a charge/discharge control system for a storage battery assembly, wherein a parallel off can be appropriately canceled when a plurality of battery blocks are connected in parallel, and a parallel off subsequently occurs in which one of the battery blocks becomes disconnected from a parallel connection.

### SOLUTION TO PROBLEM

A charge/discharge control system for a storage battery assembly according to the present invention includes a plurality of battery blocks connected in parallel with each other to a bus line, for charging/discharging, a plurality of resistive elements which correspond to the plurality of battery blocks respectively and are arranged to be connected to the bus line, a plurality of switches which correspond to the plurality of battery blocks respectively and are connected to the bus line, to be parallel with the resistive elements, and under a predetermined condition, turn on when a voltage difference between the plurality of battery blocks decreases, and turn off when it increases, and a control part which, in a case where one of the plurality of switches turns off after the plurality of switches are all on, performs a processing of throttling a charge/discharge power that is transmitted/received through the bus line according to a predetermined throttling reference.

### ADVANTAGEOUS EFFECTS OF INVENTION

According to the present invention, a parallel off can be appropriately canceled when a plurality of battery blocks are connected in parallel, and a parallel off subsequently occurs in which one of the battery blocks becomes disconnected from parallel connection.

### BRIEF DESCRIPTION OF DRAWINGS

[FIG. 1] FIG. 1 is a view showing configuration of a charge/discharge control system for a storage battery assembly according to the embodiment of the present invention.
[FIG. 2] FIG. 2 is a view showing a problem of a parallel off occurring when one of a plurality of battery blocks connected in parallel runs off parallel connection in the charge/discharge control system for the storage battery assembly according to the embodiment of the present invention.
[FIG. 3] FIG. 3 is a flow chart showing a procedure for canceling parallel off, according to the embodiment of the present invention.
[FIG. 4] FIG. 4 is a view showing a state in which parallel off occurs in the flow chart of FIG. 3.
[FIG. 5] FIG. 5 is a view showing a state in which a charge/discharge power is throttled in the flow chart of FIG. 3.
[FIG. 6] FIG. 6 is a view showing a state in which parallel off is canceled in the flow chart of FIG. 3.
[FIG. 7] FIG. 7 is a view showing a state after parallel off is canceled in the flow chart of FIG. 3.

### DESCRIPTION OF EMBODIMENTS

Hereinafter, an embodiment according to the present invention is described in detail with reference to the drawings. In the following, a lithium ion battery is described as a storage battery, but a storage battery other than the lithium ion battery may be used. For example, the storage battery may be a nickel hydride battery, a nickel cadmium battery, or the like. In the following, a storage battery assembly is described which is composed of four battery blocks connected in parallel, with each battery block having five storage batteries connected in series, which is an exemplification for explanation. The reason for employing a battery block and a storage battery assembly is to obtain a voltage and a current that correspond to a necessary electrical power of a load. Therefore, the number of battery blocks constituting the storage battery assembly, the number of storage batteries constituting the battery block, and the like may be appropriately determined according to specification for a storage battery assembly charge/discharge control system. In some cases, a plurality of storage battery assemblies described below may be further combined to obtain a storage battery assembly system.

In the following, the same elements in all drawings are denoted with same reference character and numeral, in order to avoid repeated explanation. Furthermore, in an explanation of the specification, the reference character and numeral referred heretofore are also used as required.

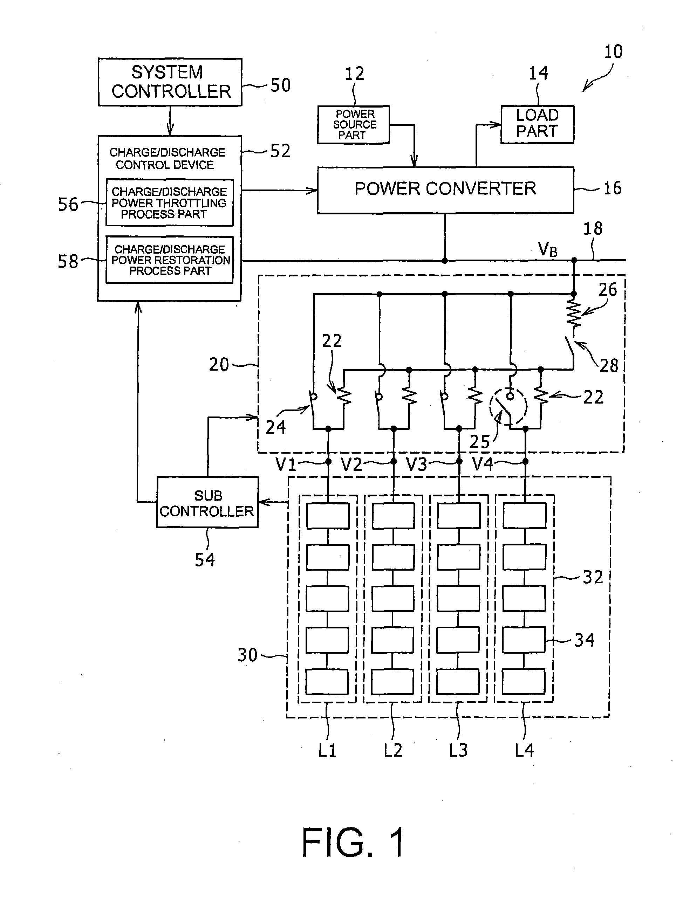

FIG. 1 is a view showing configuration of a charge/discharge control system 10 for a storage battery assembly. The charge/discharge control system 10 for the storage battery assembly is a system that performs optimum charge/discharge control on a storage battery assembly 30 through power management among the storage battery assembly 30 in which a plurality of storage batteries 34 are combined, a power source part 12, and a load part 14. There is especially provided a function to perform control for canceling a voltage difference among the battery blocks 32 even if a parallel off occurs in which one of the plurality of battery blocks 32 connected in parallel with each other runs off parallel connection.

The power source part 12 includes an external commercial power source, a photovoltaic power generation system, or the like. The external commercial power source is an AC power source of single-phase or three-phase, and is supplied, for example, from an external power company. The photovoltaic power generation system is a photoelectric conversion system that converts solar energy to DC power. The load part 14 is a load in a factory, and includes, in addition to mechanical equipment, general lighting fixtures, general air conditioners, kitchen fitments, office equipment such as a server or PC, air conditioning facilities in a factory and the like.

A power converter 16 has a function which, upon receipt of a charge/discharge command from a charge/discharge control device 52, supplies a charge power from the power source part 12 to the storage battery assembly 30, or supplies a discharge power from the storage battery assembly 30 to the load part 14. More specifically, based on the charge/discharge command, AC power of the power source part 12 is power-converted to DC power of the storage battery 34, a voltage of the DC power of the power source part 12 is voltage-converted to a voltage suitable for the storage battery 34, or, voltage-conversion is performed to a voltage of the storage battery 34 or to a voltage suitable for the load part 14. The power converter 16 is a converter such as a bidirectional AC/DC converter or a bidirectional DC/DC converter, and the kind of a converter that is used is selected according to the content of conversion that is actually performed.

A charge/discharge main bus 18 is a bus line which connects the power converter 16 and the storage battery assembly 30, for transmitting/receiving electrical power. The storage battery assembly 30 is connected to the charge/discharge main bus 18 through a switch part 20. The switch part 20 is controlled by a sub controller 54. As described above, since the storage battery assembly 30 is attached with the switch part 20 and the sub controller 54, they can be arranged, for example, in a single rack for use.

The storage battery assembly 30 is constructed by connecting storage battery control units in parallel using a predetermined number of trains, with the battery block 32 in which a predetermined number of storage batteries 34 are connected in series being the storage battery control unit. In an example of FIG. 1, five storage batteries 34 are connected in series to form one battery block 32, and the battery blocks 32 are connected in parallel in four trains, thereby constituting the storage battery assembly 30. Four trains of battery blocks 32 are sorted and denoted as L1, L2, L3, and L4 respectively. In short, the storage battery assembly 30 consists of twenty storage batteries 34. A single storage battery 34 comprises three hundred unit storage batteries. (A unit storage battery is referred to as a cell.) Each of the unit storage batteries is a lithium ion battery whose terminal voltage is 1V to 4V. Note that configuration of the storage battery assembly 30 is not limited to that in the above explanation. For example, the storage battery 34 may consist of a single unit battery, and the battery block 32 may consist of a single storage battery 34.

A terminal-to-terminal voltage of five respective storage batteries 34 constituting the battery block 32 is detected with a voltage detector which is not shown in a drawing. A total value of respective terminal-to-terminal voltages of five storage batteries 34 is a terminal-to-terminal voltage of the battery block 32. The terminal-to-terminal voltage of the battery block 32 is a voltage of a charge/discharge terminal of the battery block 32. In FIG. 1, the terminal-to-terminal voltages of four respective battery blocks 32 are denoted as V1, V2, V3, and V4. Further, a temperature of the storage battery 34 is detected with a temperature detector which is not shown in a drawing as a storage battery temperature. Furthermore, a current that flows to each of the battery blocks 32 is detected with a current detector that is not shown in a drawing as a battery block current. These data are transmitted to a charge/discharge control device 52 by way of a sub controller 54.

The switch part 20 is a circuit board which is arranged between the storage battery assembly 30 and the charge/discharge main bus 18, and contains a plurality of protective resistors 22 and 26 and a plurality of switches 24 and 28.

The protective resistor 22 is a resistive element that is provided to decrease a voltage difference among four battery blocks 32 connected in parallel in the storage battery assembly 30. The terminal-to-terminal voltages V1, V2, V3, and V4 of respective battery blocks 32 are shown in FIG. 1, and a voltage difference between the battery blocks 32 is a difference among four voltages thereof. The protective resistor 22 is a resistive element which is provided among the battery blocks 32 in order to decrease a voltage difference between the battery blocks 32 by causing a current which corresponds to a voltage difference to flow when a voltage difference exists among four battery blocks 32. In an example of FIG. 1, a protective resistor 22 is arranged in series between a charge/discharge terminal of each of the battery blocks 32 and the charge/discharge main bus 18 respectively.

One end of each of four protective resistors 22 is connected to a charge/discharge terminal of a corresponding battery block 32, and other ends are gathered and connected to the charge/discharge main bus 18 through the switch 28 and the protective resistor 26. The switch 28 is an emergency switch that is turned off in a special case and is normally in on-state. The protective resistor 26 is set to be a resistive value that is higher than that of the protective resistor 22. The protective resistor 26 is a resistor that is provided, in a case where a plurality of storage battery assemblies 30 are connected to the charge/discharge main bus 18 for the most part, to gently cancel a voltage difference when the voltage difference exists between other storage battery assemblies 30 or the charge/discharge main bus 18. By setting a resistive value of the protective resistor 26 in this way, in a case where there is a voltage difference among four battery blocks 32, a current flows more easily through the protective resistor 22 than through the protective resistor 26, and as a result, a current for canceling the voltage difference mostly flows through the protective resistor 22.

The switch 24 is an element to directly connect a battery block 32 to the charge/discharge main bus 18 when a voltage difference between the battery blocks 32 drops to a predetermined threshold voltage difference or smaller. On the other hand, when a voltage difference between the battery blocks 32 exceeds the threshold voltage difference, the switch 24 turns off. A field effect transistor (FET) may be used as such a switch 24. One switch 24 is provided between a charge/discharge terminal of each of the battery blocks 32 and the charge/discharge main bus 18, respectively. In some cases, charging may be discriminated from discharging, and two switches may be provided on each battery block 32, respectively. As the threshold voltage difference, a value of, for example, 2V to 4V may be employed.

As stated above, control is made on the storage battery assembly 30 such that each battery block 32 is used as a storage battery control unit to make voltages of the charge/discharge terminals of the battery blocks 32 uniform by using a function of the protective resistor 22, and when the voltages fit within the threshold voltage difference, the switch 24 for a particular battery block 32 is turned on.

The sub controller 54 has a function of acquiring battery block current data of four battery blocks 32 constituting the storage battery assembly 30, a terminal-to-terminal voltage of five storage batteries 34 constituting each of the battery blocks 32, and storage battery temperature data, and then at an appropriate transmission timing, transmitting them to the charge/discharge control device 52. Further, a function is also provided which calculates and monitors a terminal-to-terminal voltage of each of the battery blocks 32 based on the terminal-to-terminal voltages of five storage batteries 34 constituting each of the battery blocks 32.

The sub controller 54 further has a function to control operation of the switch 24 of the switch part 20. In other words, as stated above, a voltage difference between the battery blocks 32 is reduced by action of the protective resistor 22, and when the voltage difference comes to be a predetermined threshold voltage difference or less, corresponding switches 24 are turned on in the order starting with a battery block 32 of a highest voltage. When a voltage difference between the battery blocks 32 increases to exceed the threshold voltage difference, a corresponding switch 24 is turned off.

By turning on the switch 24 by the sub controller 54, a corresponding battery block 32 is directly connected to the charge/discharge main bus 18, with no intervention of the protective resistor 22, to immediately become the voltage of the charge/discharge main bus 18 e. In short, a voltage difference between the charge/discharge terminal of the battery block 32 and the charge/discharge main bus 18 disappears. Consequently, the battery block 32 can contribute to charging/discharging of the power converter 16 through the charge/discharge main bus 18. Turning on of all the switches 24 brings about V1=V2=V3=V4, and all the battery blocks 32 contribute to charging/discharging.

In the system controller 50 of FIG. 1, the charge/discharge control system 10 for the storage battery assembly, in order to perform optimum charge/discharge control with the storage battery assembly 30, generates an overall charge/discharge command which is one charge/discharge control command for entire power management, based on supply power information data of the power source part 12, load power information data of the load part 14, and storage battery power information data of the storage battery assembly 30. The overall charge/discharge control command is a command such as, for example, "charge at XX (kW) for YY (seconds)", "charge at XX (kW) until voltage becomes ZZ (V)", or the like.

The charge/discharge control device 52 has a function which transmits an assembly charge/discharge control command to the power converter 16 based on one overall charge/discharge control command received from the system controller 50. Further, the charge/discharge control device 52 has a function to perform control of canceling a voltage difference between the battery blocks 32 when parallel off occurs in which one of a plurality of battery blocks 32, connected in parallel with each other, runs off parallel connection. In FIG. 1, it is shown that a switch 25 connected to a battery block 32 of train L4 in four battery blocks 32 turns off while other switches 24 turn on, as a result, the L4 battery block 32 runs off the parallel connection, and thus parallel off is caused.

The charge/discharge control device 52 may be constituted by a computer. Needless to say, separate control circuits may be combined for constitution.

The charge/discharge control device 52 includes a charge/discharge power throttling process part 56 which throttles a charge/discharge power when one of a plurality of battery blocks 32 becomes parallel off, and a charge/discharge power restoration process part 58 which restores a charge/discharge power when the parallel off is canceled by throttling of the charge/discharge power. These functions can be realized by executing software. More specifically, by executing a parallel off cancel program, these functions are realized. Note that a part of the functions may be realized using hardware.

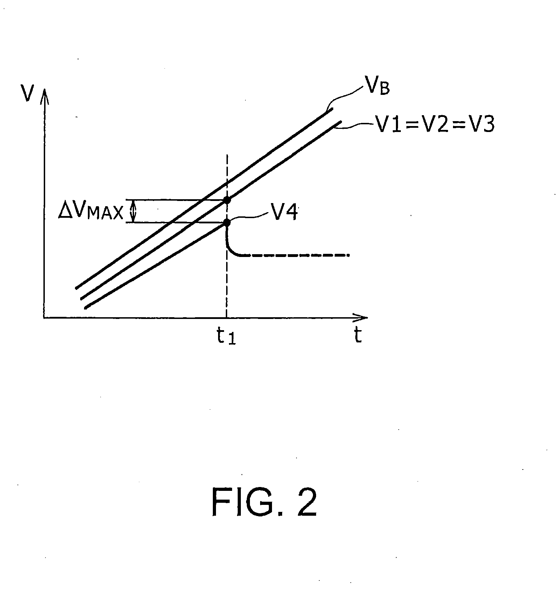

The action of the above-described configuration will be described in detail with reference to FIG. 2 to FIG. 7. In the following, description will be made with an assumption that parallel off has occurred during constant power charging, but this is just one example for description. Needless to say, charging may be other than that of constant power, and further, there may be a case in which parallel off occurs during discharging. Furthermore, in the following, description is made with the assumption that a parallel off has occurred in one of four battery blocks 32, but there may be a case in which the parallel off occurs in two or more battery blocks.

FIG. 2 is a view which shows occurrence of parallel off, in the middle of constant power charging, in one of four battery blocks 32. In FIG. 2, the abscissa represents time and the ordinate represents a terminal-to-terminal voltage of the battery block 32. Note that parallel off means a state in which a voltage difference among four battery blocks 32 is canceled, to turn on all switches 24 between respective battery blocks 32 and the charge/discharge main bus 18, and four battery blocks 32 are connected in parallel with each other, and then one battery block 32 runs off parallel connection.

One of the factors that cause parallel off is a case in which, for some reason or other, a voltage difference between the battery blocks becomes large and a switch turns off. An example in which a voltage difference becomes large is a case in which a switch maintains an on-state and a current continues to flow. If a current continues to flow to the switch, the switch is heated, its temperature rises, and an internal resistance of the switch rises. If only one switch rises in temperature compared to other switches because of variation in quality of the switch or the like, an internal resistance increases more than others, heating becomes further intense, and temperature difference increases, resulting in a large voltage difference. As a result, a battery block in a plurality of battery blocks, connected in parallel with each other, runs off parallel connection to cause parallel off. In FIG. 1, it is shown that a switch 25 that is connected to a battery block 32 denoted as L4 is turned off.

In FIG. 2, a voltage of the charge/discharge main bus 18 is shown as V_{B}, and the terminal-to-terminal voltages of the L1-L4 battery blocks 32 are shown as V1 to V4. In a stationary charge/discharge state, each of switches 24 of four battery blocks 32 is on, and there is little voltage difference among V1 to V4, meaning substantially the same voltage. Here, as a result of constant power charging, V_{B} increases as time passes, and V1 to V4 accordingly increase with time.

At time t₁, the switch 25 turns off, and accordingly, the battery block 32 denoted as L4 in FIG. 1 runs off parallel connection, to cause parallel off. In this case, since connection is established to the charge/discharge main bus 18 through the protective resistor 22, little current flows through the battery block 32 which corresponds to the switch 25, resulting in a low value of V4.

Occurrence of parallel off is detected by the sub controller 54 and is transmitted to the charge/discharge control device 52. The charge/discharge control device 52, in response to the fact that the number of battery blocks 32 has decreased from four trains to three trains, issues a command for decreasing an entire charge power to 3/4 to the power converter 16. The command keeps the values the same for the charge/discharge power for the respective three battery blocks 32, of which the switches 24 are kept on, and as a result, the three battery blocks 32 other than the parallel-off battery block 32 continue the same constant power charging, and the terminal-to-terminal voltages V1 to V3 continue to rise.

Therefore, a voltage difference between the terminal-to-terminal voltage V4 of the parallel-off battery block 32 and the terminal-to-terminal voltages V1 to V3 of other battery blocks 32 will further continue to increase with time if this goes on. Thus, regardless of continuation of constant power charging, a voltage difference is not canceled among four battery blocks 32, and the voltage difference continues to increase instead. Accordingly, parallel off continues, and only three battery blocks 32 out of four battery blocks 32 can contribute to charging/discharging as the storage battery assembly 30. This is the problem that is caused when parallel off occurs.

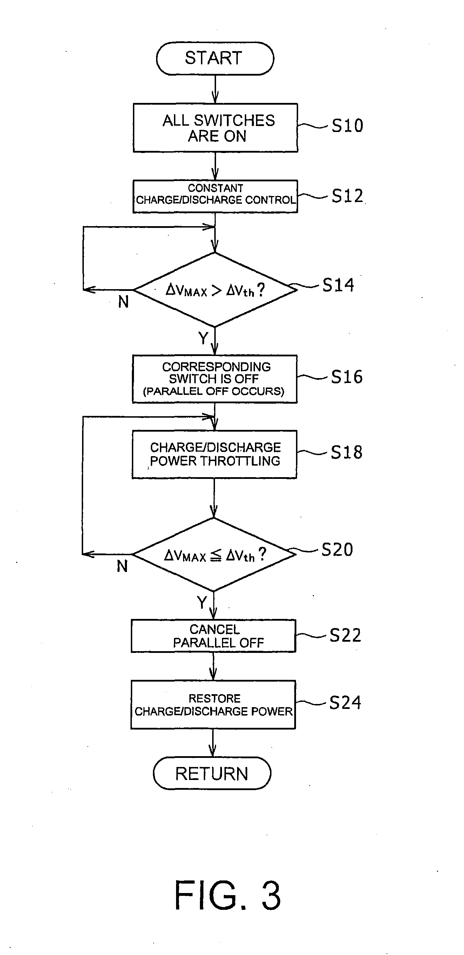

FIG. 3 is a flow chart which shows a procedure to cancel parallel off when the parallel off occurs. Each procedure corresponds to a processing procedure of a parallel-off cancel program. Even if a voltage difference occurs between the battery blocks 32 at first, the voltage difference gradually decreases due to action of the protective resistor 22, and when the voltage difference reaches a threshold voltage difference or smaller, the switch 24 turns on. The procedure is repeated, and the four switches 24 all turn on (S10). A stationary charge/discharge control state starts after all the switches 24 turn on like this (S12).

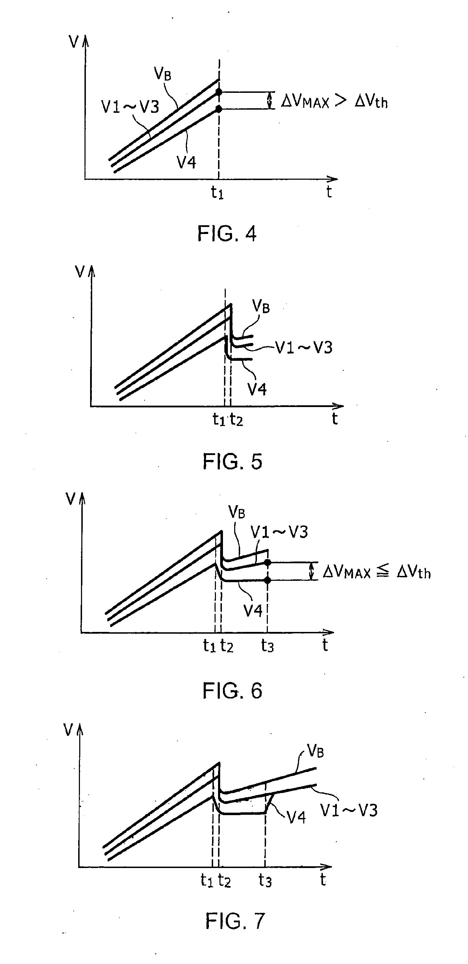

Then, it is determined whether or not maximum value ΔV_{MAX} of a voltage difference between the battery blocks 32 exceeds a threshold voltage difference ΔVₜₕ (S14). As described above, when the switch 24 stays on, the internal resistance of the switch 24 increases. If, as a result of this, determination of S14 is positive, a corresponding switch 25 is turned off to cause parallel off (S16). FIG. 4 shows that situation. The ordinate and abscissa of FIG. 4 are same as FIG. 2. In that view, at time t₁, the terminal-to-terminal voltage V4 of the L4 battery block 32 diverges from the terminal-to-terminal voltage of other battery blocks 32 and the maximum value ΔV_{MAX} of a voltage difference between the battery blocks 32 exceeds the threshold voltage difference ΔVₜₕ, as a result of which determination of S16 becomes positive, which shows that parallel off has occurred.

Note that in FIG. 4, in order to distinguish the operation of the charge/discharge main bus 18 from that of each of the battery blocks 32, a line representing a voltage of the charge/discharge main bus 18 and a line representing voltages V1 to V3 are shown separately. However, if the switch 24 is turned on, the terminal-to-terminal voltages of the battery blocks 32 are almost identical with the voltage of the charge/discharge main bus 18.

When parallel off occurs, no current flows to the switch 25, and heating that is caused by the fact that a current flows to an internal resistance stops, and so rising of temperature shifts to dropping of temperature. On the other hand, because a potential difference inside a battery which corresponds to an amount generated when a current is applied to the internal resistance of the battery disappears, and because of stabilizing action inside the battery, the voltage V4 drops further than that at the time point of t₁, which results in further increase of a voltage difference from the charge/discharge main bus 18 and other battery blocks 32. Although four trains of battery blocks 32 have contributed to charging/discharging, now the charge/discharge is carried out by three trains of battery blocks. In order to cancel the parallel off, it is required to lower voltages of other battery blocks 32 so that a voltage difference from V4 is within a threshold value.

For that purpose, when the parallel off occurs, throttling of charge/discharge power is performed (S18). The processing procedure is executed by a function of a charge/discharge power throttling process part 56 of the charge/discharge control device 52. The throttling processing is performed according to a predetermined throttling reference. To meet the throttling reference, a current is suppressed so that the terminal-to-terminal voltages V1 to V3 of other battery blocks 32 are lowered compared to those at the time point t₁ within an appropriate time period. In some cases, the current may be stopped. More specifically, the voltage V_{B} of the charge/discharge main bus 18 is lowered so that a constant voltage charge current is reduced. A target amount of dropping of the V_{B} may be, for example, ΔVₜₕ.

FIG. 5 is a view showing a state for the case where the charge/discharge power is throttled, with axis of abscissa, ordinate, and the like thereof being the same as those in FIG. 4. Here, the voltage V_{B} of the charge/discharge main bus 18 is lowered at time t₂, and accordingly, V1 to V3 are lowered as well, thereby throttling the constant charge power.

At this time point, when ΔV_{MAX} is compared with ΔVₜₕ, it is conceivable that ΔV_{MAX} may be equal to ΔVₜₕ or less in some cases. However, when the switch 25 is turned on under such a condition that the switch 25 is not yet sufficiently cooled down, or in a similar case, it may happen that ΔV_{MAX} exceeds ΔVₜₕ at the time when the switch 25 is turned on. In other words, if ΔV_{MAX} is compared with ΔVₜₕ just after time t₂, it is possible that the switch 25 will cause chattering. One method of preventing the chattering is to temporarily stop a current as described above. Another method is to shift the time for comparing ΔV_{MAX} with ΔVₜₕ from t₂ in advance. In the following, a description will be given assuming the latter method.

In still another method, a restoration threshold voltage difference ΔVₜₕ₂ at the time of canceling parallel off can be set to make ΔVₜₕ₂ smaller than ΔVₜₕ in value. In short, when a voltage difference between a plurality of battery blocks 32 is decreased to be the restoration threshold voltage difference ΔVₜₕ₂ or less, which is predetermined to be a value smaller than the threshold voltage difference ΔVₜₕ, the throttling processing is stopped and the switch 25 that has been turned off by parallel off is turned on again. By using this method, the parallel off can be canceled by throttling the voltage difference to be a sufficiently small value, thereby preventing chattering from occurring, since, even if the parallel off is canceled, it is difficult to exceed ΔVₜₕ from that state.

With reference to FIG. 3 again, when the throttling processing is performed, it is determined whether or not the maximum value ΔV_{MAX} of a voltage difference between the battery blocks 32 is equal to the threshold voltage difference ΔVₜₕ or less after a predetermined time has passed (S20). If the determination result is negative, a flow returns to S18, to further increase the amount of throttling. When the determination result is positive, a state of the switch 25 shifts from off to on, and thus parallel off is canceled (S22). FIG. 6 is a view showing that a determination at S20 is positive at time t₃. The abscissa, ordinate, and the like of FIG. 6 are the same as those of FIG. 2, FIG. 4, and FIG. 5.

With reference to FIG. 3 again, when the parallel off is canceled, restoration of charge/discharge power is performed (S24). This step is executed by a function of the charge/discharge power restoration process part 58 of the charge/discharge control device 52. The restoration processing of the charge/discharge power is performed according to a predetermined restoration reference. The restoration reference can be defined as not to easily return to parallel off again. In other words, in order to prevent the temperature of the switches 24 and 25 rising abruptly, an original charge/discharge power can be restored by, for example, gradually increasing the charge/discharge power. FIG. 7 shows a state in which V4 becomes the same as V1 to V3 so that parallel off is canceled at time t₃, and after that, the charge/discharge power is gradually raised.

As stated above, in the case where parallel off occurs, the parallel off can be canceled at a time when a switch 25 that has been turned off is properly cooled down by performing throttling processing of the charge/discharge power. By canceling parallel off, the four battery blocks 32 are all made to contribute to charging/discharging again, and thus charging/discharging of the storage battery assembly 30 can be properly controlled.

In the foregoing, canceling of parallel off has been described in a case where a parallel off is caused by temperature rising of a switch 24, but in some cases, parallel off can occur for other reasons. In such a case, the parallel off cannot be canceled even if a procedure in FIG. 3 is carried out. Therefore, an alert may be issued in a case where a negative determination is made at S20 in the procedure of FIG. 3.

As described above, according to the embodiment of the present invention, the storage battery assembly control system includes a plurality of battery blocks connected in parallel with each other to a bus line, resistive elements which correspond to the plurality of battery blocks respectively and are arranged in parallel with each other to be connected to the bus line, and a switch connected in parallel with the resistive element. Then, in a case where a state in which a plurality of switches are all on is shifted to a state in which one of the plurality of switches becomes off, throttling processing is performed on the charge/discharge power that is transmitted/received through the bus line according to a predetermined reference. By throttling the charge/discharge power, increase of a voltage difference between the parallel-off battery block and other battery blocks can be suppressed. On the other hand, since no current flows to a switch that has been turned off, a temperature drops. Accordingly, after some time passes, a voltage difference between the parallel-off battery block and other battery blocks decreases, thereby canceling the parallel off. As a result, all the battery blocks can contribute to charging/discharging again.

### INDUSTRIAL APPLICABILITY

The charge/discharge control system for the storage battery assembly according to the present invention is applicable to charge/discharge control of the storage battery assembly in which a plurality of storage batteries are connected in parallel.

### REFERENCE NUMERALS LIST

10 charge/discharge control system for storage battery assembly, 12 power source part, 14 load part, 16 power converter, 18 charge/discharge main bus (bus line), 20 switch part, 22 and 26 protective resistor (resistive element), 24, 25, and 28 switch, 30 storage battery assembly, 32 battery block, 34 storage battery, 50 system controller, 52 charge/discharge control device, 54 sub controller, 56 charge/discharge power throttling process part, and 58 charge/discharge power restoration process part.

## Claims

1. A charge/discharge control system for a storage battery assembly, comprising:
a plurality of battery blocks connected in parallel with each other to a bus line for charging/discharging;
a plurality of resistive elements which correspond to the plurality of battery blocks respectively and are arranged to be connected to the bus line;
a plurality of switches which correspond to the plurality of battery blocks respectively and are connected to the bus line, to be parallel with the resistive elements, and under a predetermined condition, turn on when a voltage difference between the plurality of battery blocks decreases, and turn off when the voltage difference increases; and
a control part which, in a case where one of the plurality of switches turns off after the plurality of switches are all on, performs processing of throttling a charge/discharge power transmitted/received through the bus line according to a predetermined throttling reference.

2. The charge/discharge control system for the storage battery assembly according to claim 1, wherein
the control part performs restoration processing in which the charge/discharge power is restored according to a predetermined restoration reference when the voltage difference between the plurality of battery blocks decreases and the switch that has been turned off turns on again after the throttling processing.

3. The charge/discharge control system for the storage battery assembly according to claim 2, wherein
the plurality of switches are, as the predetermined condition, sequentially turned on according to a predetermined order when the voltage difference between the plurality of battery blocks comes to be a predetermined threshold voltage difference or less, and are turned off when the voltage difference between the plurality of battery blocks exceeds the threshold voltage difference.

4. The charge/discharge control system for the storage battery assembly according to claim 3, wherein,
when the voltage difference between the plurality of battery blocks decreases to be a restoration threshold voltage difference or less, which is predetermined as a value smaller than the threshold voltage difference, the throttling processing is stopped and the switch that has been turned off is turned on again.
